# FASCICULE DE BREVET EUROPEEN

(11) **EP 3 004 658 B1**
(45) Date de publication et mention de la délivrance du brevet: **14.08.2019**
(21) Numéro de dépôt: 14731730.9
(22) Date de dépôt: 27.05.2014
(51) Int. Cl.: F16B 5/02, F16B 37/14

(54) **ASSEMBLAGE A LIAISON AUTO-SERRANTE EN TEMPERATURE**
ANORDNUNG MIT EINER TEMPERATURSELBSTVERRIEGELUNGSVERBINDUNG
ASSEMBLY HAVING A TEMPERATURE SELF-LOCKING CONNECTION

(30) Priorité: 28.05.2013 FR 1354818
(43) Date de publication de la demande: 13.04.2016
(73) Titulaire: Safran Ceramics, 33185 Le Haillan (FR)
(72) Inventeur: REVEL, Thomas, F-33200 Bordeaux (FR); CARRERE, Benoit, F-33320 Le Taillan Medoc (FR); CONETE, Eric, F-33700 Merignac (FR); CAMY, Pierre, F-33160 Saint Medard en Jalles (FR)
(74) Mandataire: Desormiere, Pierre-Louis
(86) Numéro de dépôt international: PCT/FR2014/051233
(87) Numéro de publication internationale: WO 2014/191672

(56) Documents cités:
- US-A- 3 459 447
- US-A- 4 671 583
- US-A- 5 497 616
- US-B1- 6 405 425

## Description

### Arrière-plan de l'invention

L'invention concerne l'assemblage par liaison mécanique de pièces en matériau composite thermostructural, tel qu'un matériau composite à matrice céramique (CMC) ou carbone/carbone (C/C), matériau typiquement formé d'un substrat poreux, tel qu'un substrat fibreux poreux densifié par une matrice céramique. Les fibres du substrat peuvent être notamment en carbone ou céramique. La matrice est en une céramique réfractaire telle que, par exemple, carbure, nitrure, borure ou oxyde réfractaire. Les matériaux composites thermostructuraux sont remarquables par leurs propriétés mécaniques, qui les rendent aptes à constituer des éléments de structure, et par leur capacité à conserver ces propriétés à des températures élevées.

L'invention concerne plus particulièrement les comportements aérodynamique et thermique des liaisons mécaniques utilisées pour assembler des pièces en matériau composite thermostructural lorsque celles-ci sont destinées à être baignées dans des flux haute température, comme par exemple dans le cas de la fabrication de tout ou partie d'ensembles d'arrière-corps de moteur aéronautique tels que des cônes d'échappement (encore appelés « plugs » ou « exhaust ») ou de volets de tuyère à section variable.

Dans ces applications, les pièces à assembler sont en général relativement fines (épaisseur de quelques millimètres) et doivent répondre à des exigences aérodynamiques, ce qui conduit à utiliser préférentiellement des rivets pour réaliser les liaisons mécaniques entre les pièces. Dans le cas des assemblages utilisés pour réaliser des parties d'arrière-corps de moteur aéronautique, on utilise généralement des rivets présentant, d'un côté de l'assemblage, une tête fraisée logée dans une fraisure ménagée dans une des pièces à assembler et, de l'autre côté, une colonnette ou rondelle permettant une reprise des dilatations différentielles entre le rivets, qui se dilatent significativement, et les pièces en matériaux composite thermostructural, qui se dilatent peu. L'intégration de la tête du rivet dans une fraisure présente d'un côté de l'assemblage permet d'obtenir de bonnes performances aérodynamiques mais seulement de ce côté de l'assemblage car la présence de la colonnette et d'une partie du corps du rivet de l'autre côté de l'assemblage crée une traînée importante.

Une autre solution utilisée dans la réalisation des volets de tuyère à section variable consiste à lier les pièces en matériau composite thermostructural avec des rivets, tels que ceux commercialisés sous la marque Fybrfast®, ces rivets comprenant, d'un côté, une tête et, de l'autre côté, une extrémité qui est écrasée et aplatie afin de fixer les pièces entre elles. Cependant, avec ce type de rivet, la tête et la partie du corps écrasée du rivet dépassent de chaque côté de l'assemblage et se trouvent, par conséquent, au-delà de la ligne aérodynamique de l'assemblage.

Un assemblage entre deux pièces en matériau composite est divulgué dans le document US 3 459 447.

### Objet et résumé de l'invention

L'invention a pour but de proposer une solution pour l'assemblage de pièces en matériau composite utilisant un ou plusieurs systèmes de fixation qui présentent un coefficient de dilatation thermique supérieur au coefficient de dilatation thermique des pièces en matériau composite, le système de fixation ne devant pas ou très peu impacter les performances aérodynamiques de l'assemblage.

Ce but est atteint avec un assemblage comprenant une première pièce et une deuxième pièce en matériau composite maintenues l'une contre l'autre par au moins un système de fixation comprenant une vis comportant une tête fraisée à partir de laquelle s'étend une partie filetée et un écrou comportant une tête fraisée à partir de laquelle s'étend un fût comportant un taraudage coopérant avec la partie filetée de la vis, la tête de la vis étant en appui contre une fraisure ménagée dans la première pièce, la tête de l'écrou étant en appui dans une fraisure ménagée dans la deuxième pièce, le système de fixation étant apte à faire basculer au moins une des deux têtes en direction de la fraisure dans laquelle elle est logée lors de la dilatation axiale dudit système de fixation.

Ainsi, l'assemblage de l'invention est réalisé avec des liaisons mécaniques qui sont intégrées de chaque côté de celui-ci, c'est-à-dire qui ne dépassent pas de la surface externe des pièces assemblées. L'assemblage de l'invention peut, par conséquent, être baigné des deux côtés dans un flux haute température sans dégradation des performances aérodynamiques par les systèmes de liaison.

En outre, le système de fixation utilisé est conçu pour appliquer un effort de maintien supplémentaire par basculement d'au moins une des têtes du système lors des montées en température, ce qui permet de compenser la dilatation, en particulier axiale, de chaque système de fixation et de conserver un effort de serrage à chaud.

Selon un mode de réalisation de l'assemblage conforme à l'invention, une des têtes fraisées du système de fixation comporte une pluralité de fentes radiales et présente un angle supérieur à celui de la fraisure de la pièce dans laquelle elle est logée, la tête en question étant maintenue en précontrainte dans ladite fraisure. Ainsi, lorsque l'assemblage est exposé à un flux haute température, le système de fixation se dilate et la tête, maintenue jusqu'ici en précontrainte, bascule alors en direction de la fraisure dans laquelle elle est logée. En basculant ainsi, la tête exerce alors des efforts supplémentaires qui permettent de maintenir à chaud l'effort de serrage exercé sur les pièces par le système de fixation.

Selon un aspect de l'assemblage de l'invention, la vis et l'écrou sont en un matériau choisi par au moins un des matériaux suivants : Inconel® 625 ou 718, Waspaloy®, Haynes® 282®, acier inoxydable A286 et tout autre acier haute performance.

Selon un autre mode de réalisation de l'invention, le système de fixation comprend un pion s'étendant à l'intérieur du système de fixation entre la tête de la vis et la tête de l'écrou, le pion présentant un coefficient de dilatation thermique supérieur au coefficient de dilatation thermique de la vis et de l'écrou. Ainsi, lorsque l'assemblage est soumis à des températures élevées, par exemple dans le cas où il est baigné dans un flux chaud de gaz de combustion, le pion se dilate plus fortement que le système de fixation et exerce au niveau de ses extrémités inférieure et supérieure des forces de poussée sur les portions internes des têtes de la vis et de l'écrou. Les têtes basculent alors en direction de la fraisure dans laquelle elles sont logées lors de la dilatation axiale du pion et exercent chacune des efforts sur les pièces qui permettent de maintenir à chaud l'effort de serrage exercé sur les pièces par le système de fixation.

Selon un aspect de l'assemblage de l'invention, la vis et l'écrou sont en Inconel® 718 (CTE_{600°C} = 14,8) tandis que le pion est en acier inoxydable A286 (formule 26NCT25 et CTE_{600°C} = 18).. Selon un même aspect de l'assemblage de l'invention, la vis et l'écrou sont en titane (CTE_{600°C} = 9,9) tandis que le pion est en Waspaloy® (CTE_{600°C} = 14,6).

Selon un autre aspect de l'assemblage de l'invention, la tête de la vis et la tête de l'écrou comportent chacune des lumières. Ces lumières facilitent la déformation élastique desdites têtes lors des dilatations et rétractations du pion.

Selon un autre aspect de l'assemblage de l'invention, les première et deuxième pièces sont en matériau composite à matrice céramique.

Selon encore un autre aspect de l'assemblage de l'invention, les première et deuxième pièces présentent chacune une épaisseur inférieure à 3 mm.

Selon toujours un autre aspect de l'assemblage de l'invention, les première et deuxième pièces sont des pièces d'arrière-corps de moteur aéronautique.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique en perspective montrant la réalisation d'un assemblage conformément à un mode de réalisation de l'invention,
- les figures 2A et 2B sont des vues schématiques respectivement en coupe et de dessus montrant l'assemblage de la figure 1 à froid ;
- les figures 3A et 3B sont des vues schématiques respectivement en coupe et de dessus montrant l'assemblage de la figure 1 lorsqu'il est exposé à un flux haute température ;
- la figure 4 est une vue schématique en perspective montrant la réalisation d'un assemblage conformément à un mode de réalisation de l'invention,
- la figure 5 est une vue schématique en coupe montrant l'assemblage de la figure 4 à froid ;
- la figure 6 est une vue schématique en coupe montrant l'assemblage de la figure 4 lorsqu'il est exposé à de hautes températures.

### Description détaillée de mode de réalisation

La présente invention s'applique d'une manière générale à tout assemblage entre des pièces en matériau composite utilisant un ou plusieurs systèmes de fixation qui présentent un coefficient de dilatation thermique supérieur au coefficient de dilatation thermique des pièces en matériau composite, le système de fixation ne devant pas ou très peu impacter les performance aérodynamique de l'assemblage.

Les pièces à assembler peuvent être notamment en composite thermostructural à matrice céramique (CMC), c'est-à-dire tout matériau formé d'un renfort en fibres réfractaires (carbone ou céramique) densifié par une matrice céramique elle aussi réfractaire, tels que des matériaux C/SiC, SiC/SiC, C/C-SiC, etc. Les pièces peuvent être également en d'autres matériaux composites thermostructuraux présentant un faible coefficient de dilatation tels les matériaux C/C (renfort et matrice en carbone).

L'assemblage selon l'invention est notamment, mais non exclusivement, destiné à être utilisé pour la réalisation tout ou partie d'ensembles d'arrière-corps de moteur aéronautique tels que des cônes d'échappement (encore appelés « plugs » ou « exhaust ») ou volets de tuyère à section variable.

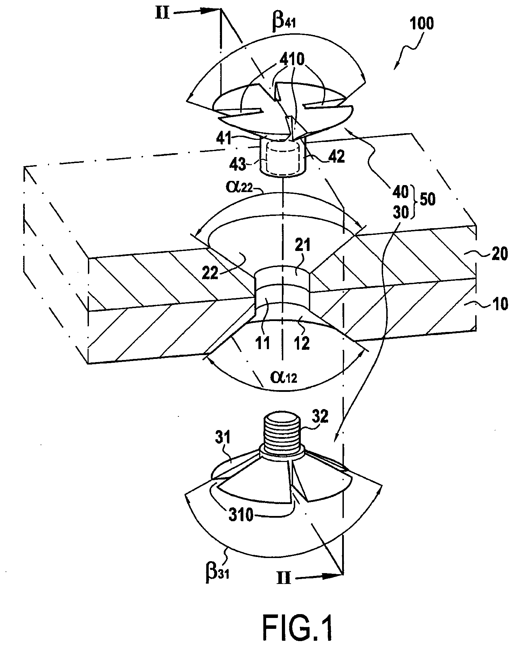

Les figures 1, 2A, 2B, 3A et 3B illustrent un assemblage conformément à un mode de réalisation de l'invention. Comme illustré sur la figure 1, un assemblage 100 entre deux pièces 10 et 20 en matériau composite thermostructural CMC est réalisé au moyen d'un système de fixation 50 comprenant une vis 30 et un écrou 40 qui sont placés dans des orifices 11 et 21 ménagés dans les pièces 10 et 20. Plus précisément, la vis 30 comporte une tête fraisée 31 à partir de laquelle s'étend une partie filetée 32, la tête fraisée 31 étant logée dans une fraisure 12 ménagée dans la pièce 10. L'écrou 40 comporte également une tête fraisée 41 à partir de laquelle s'étend un fût 42 comportant un taraudage 43 destiné à coopérer avec la partie filetée 32 de la vis 30. La tête fraisée 41 de l'écrou 40 est logée dans une fraisure 22 ménagée dans la pièce 20. La vis et l'écrou peuvent être notamment réalisés en un des matériaux suivants : Inconel® 625 ou 718, Waspaloy®, Haynes® 282®, acier inoxydable A286 et tout autre acier haute performance.

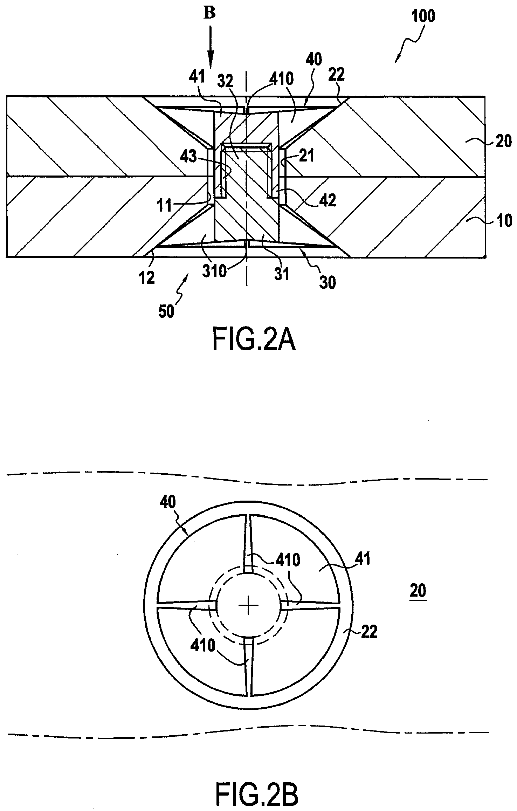

Dans le mode de réalisation décrit ici, les têtes fraisées 31 et 41 comportent chacune une pluralité de fentes radiales 310 et 410. En outre, la tête fraisée 31 de la vis 30 présente un angle β₃₁ qui est supérieur à l'angle α₁₂ de la fraisure 12 dans laquelle elle doit être logée. De même, la tête fraisée 41 de l'écrou 40 présente un angle β₄₁ qui est supérieur à l'angle α₂₂ de la fraisure 22 dans laquelle elle doit être logée. Comme illustrée sur les figures 2A et 2B, la vis 30 est vissée dans l'écrou 40 suivant un effort de serrage permettant de placer les têtes fraisées 31 et 41 en précontrainte dans leur fraisure respectives 12 et 22. Dans cet état précontraint, les têtes 31 et 41 sont élastiquement déformées grâce à la présence des fentes 310 et 410.

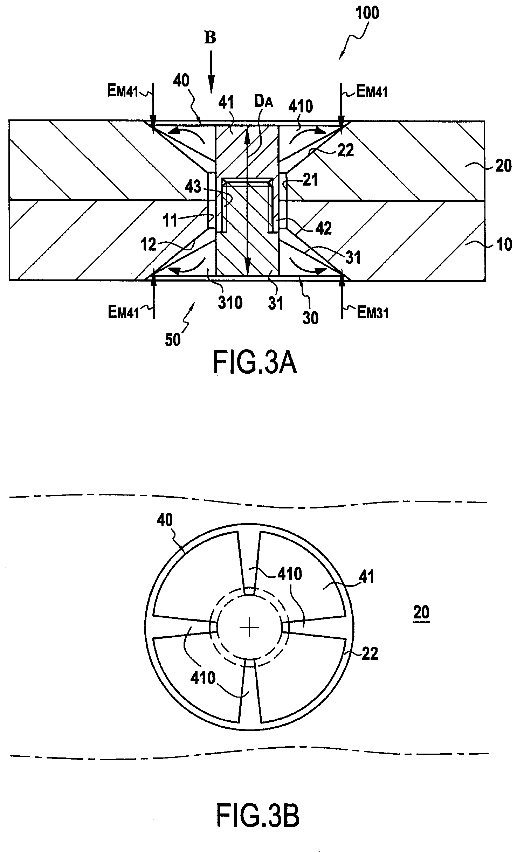

Lorsque l'assemblage 100 est soumis à des températures élevées, par exemple dans le cas où il est baigné dans un flux chaud de gaz de combustion, le système de fixation se dilate en particulier dans une direction axiale D_{A} comme illustrée sur la figure 3A. Les têtes fraisées 31 et 41 maintenues jusqu'ici en précontrainte dans leur fraisure respectives 12 et 22 basculent alors en direction de la fraisure dans laquelle elles sont logées lors de la dilatation axiale du système de fixation. Les fentes 310 et 410 retrouvent alors leur configuration de repos comme illustrée pour les fentes 410 de la tête 41 sur la figure 3B. Les têtes 31 et 41 exercent alors chacune des efforts E_{M31} et E_{M41} sur les pièces 10 et 20 qui permettent de maintenir à chaud l'effort de serrage exercé sur les pièces par le système de fixation. Une fois refroidi, l'assemblage 100 reprend la configuration à froid représentée sur les figures 2A et 2B.

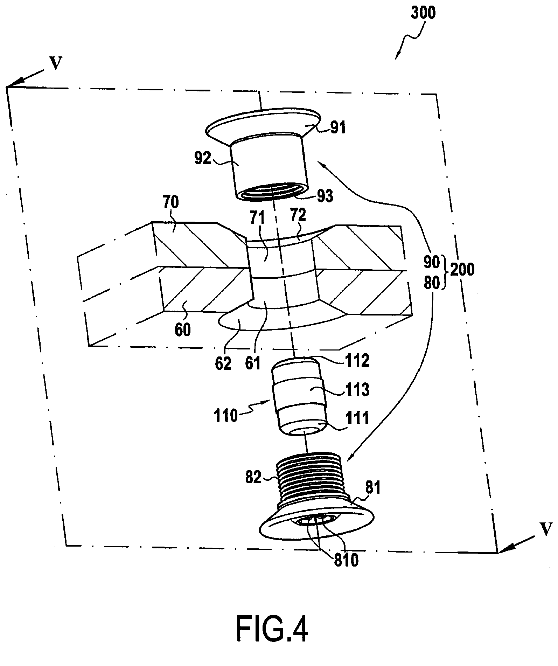

Les figures 4, 5 et 6 illustrent un assemblage conformément à un autre mode de réalisation de l'invention. Comme illustré sur la figure 4, un assemblage 300 entre deux pièces 60 et 70 en matériau composite thermostructural CMC est réalisé au moyen d'un système de fixation 200 comprenant une vis 80 et un écrou 90 qui sont placés dans des orifices 61 et 71 ménagés dans les pièces 60 et 70. Plus précisément, la vis 80 comporte une tête fraisée 81 à partir de laquelle s'étend une partie filetée 82, la tête fraisée 81 étant logée dans une fraisure 62 ménagée dans la pièce 60. L'écrou 90 comporte également une tête fraisée 91 à partir de laquelle s'étend un fût 92 comportant un taraudage 93 destiné à coopérer avec la partie filetée 82 de la vis 80. La tête fraisée 91 de l'écrou 90 est logée dans une fraisure 72 ménagée dans la pièce 70.

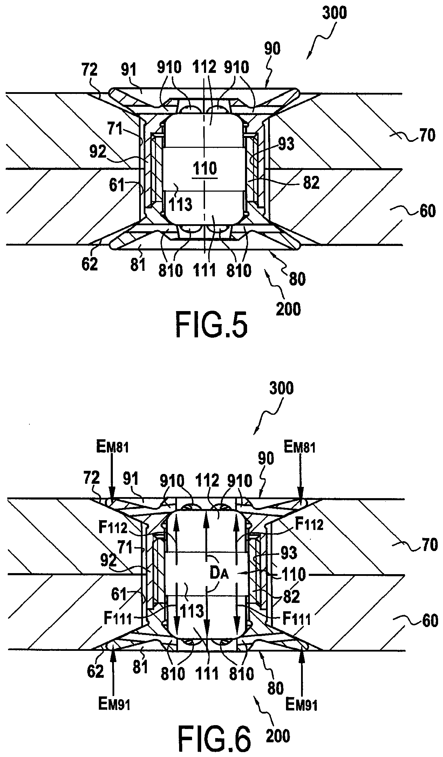

Dans le mode de réalisation décrit ici, un pion 110 est en outre inséré dans le volume interne 101 définit entre la vis 80 et l'écrou 90 lorsque le système de fixation 200 est monté (figure 5). Le pion 110 est dimensionné de manière à être en contact avec les têtes 81 et 91 de la vis 80 et de l'écrou 90. Plus précisément, l'extrémité inférieure 111 du pion 110 est en contact avec une portion interne 810 de la tête 81 de la vis 80 située au niveau de sa partie jointive avec la partie filetée 82 tandis que l'extrémité supérieure 112 du pion 110 est en contact avec une portion interne 910 de la tête 91 de l'écrou 90 au niveau de sa partie jointive avec le fût 92.

Le pion 110 présente un coefficient de dilatation thermique (CTE) supérieur au coefficient de dilatation thermique de la vis 80 et de l'écrou 90. Ainsi, lorsque l'assemblage 300 est soumis à des températures élevées, par exemple dans le cas où il est baigné dans un flux chaud de gaz de combustion, le pion 110 se dilate plus fortement que le système de fixation 200 et exerce au niveau de ses extrémités inférieure et supérieure 111 et 112 des forces de poussée F₁₁₁ et F₁₁₂ respectivement sur les portions internes 810 et 910 des têtes 81 et 91 (Figure 6). Les têtes 81 et 91 basculent alors en direction de la fraisure dans laquelle elles sont logées lors de la dilatation axiale du pion 110. Les têtes 81 et 91 exercent chacune des efforts E_{M81} et E_{M91} sur les pièces 60 et 70 qui permettent de maintenir à chaud l'effort de serrage exercé sur les pièces par le système de fixation. Une fois refroidi, l'assemblage 100 reprend la configuration à froid représentée sur la figure 5.

A titre d'exemple non limitatifs, la vis et l'écrou peuvent être réalisés en Inconel® 718 (CTE_{600°C} = 14,8) tandis que le pion est en acier inoxydable A286 (formule 26NCT25 et CTE_{600°C} = 18). Selon une autre variante non limitative, la vis et l'écrou sont réalisés en titane (CTE_{600°C} = 9,9) tandis que le pion est en Waspaloy® (CTE_{600°C} = 14,6).

Dans l'exemple décrit ici, le pion 110 comporte en outre un épaulement central 113 qui permet de maintenir celui-ci dans en position dans le volume interne 101 et d'équilibrer les forces de poussée qu'il exerce sur les têtes 81 et 91. En outre, dans l'exemple présenté ici, les têtes 81 et 91 comportent chacune respectivement des lumières 810 et 910 qui facilitent la déformation élastique desdites têtes lors des dilatations et rétractations du pion 110.

## Revendications

1. Assemblage (100) comprenant une première pièce (10) et une deuxième pièce (20) en matériau composite maintenues l'une contre l'autre par au moins un système de fixation (50) comprenant une vis (30) comportant une tête fraisée (31) à partir de laquelle s'étend une partie filetée (32) et un écrou (40) comportant une tête fraisée (41) à partir de laquelle s'étend un fût (42) comportant un taraudage (43) coopérant avec la partie filetée (32) de la vis (30), la tête (31) de la vis (30) étant en appui contre une fraisure (12) ménagée dans la première pièce (10), la tête de l'écrou (41) étant en appui dans une fraisure (22) ménagée dans la deuxième pièce (20), **caractérisé en ce que** le système de fixation (50) est apte à faire basculer au moins une des deux têtes (31, 41) en direction de la fraisure (12; 22) dans laquelle elle est logée lors de la dilatation axiale dudit système de fixation (50).

2. Assemblage selon la revendication 1, **caractérisé en ce qu'**au moins une des têtes fraisées (31, 41) du système de fixation comporte une pluralité de fentes radiales (310; 410) et présente un angle (β₃₁; β₄₁) supérieur à celui (α₁₂, α₂₂) de la fraisure (12; 22) de la pièce dans laquelle elle est logée et **en ce que** ladite au moins une tête (31; 41) est maintenue en précontrainte dans ladite fraisure (12; 22).

3. Assemblage selon la revendication 1, **caractérisé en ce que** le système de fixation (200) comprend un pion (110) s'étendant à l'intérieur dudit système de fixation entre la tête (81) de la vis (80) et la tête (91) de l'écrou (90) et **en ce que** le pion (110) présente un coefficient de dilatation thermique supérieur au coefficient de dilatation thermique de la vis (80) et de l'écrou (90).

4. Assemblage selon la revendication 3, **caractérisé en ce que** la vis (30; 80) et l'écrou (40; 90) sont en alliage à base de nickel ayant un coefficient de dilatation thermique à 600°C de 14,8 et **en ce que** le pion est en en acier inoxydable A286 (formule 26NCT25 et CTE_{600°C} = 18).

5. Assemblage selon la revendication 3, **caractérisé en ce que** la vis (30; 80) et l'écrou (40; 90) sont en titane (CTE_{600°C} = 9,9) tandis que le pion est en alliage à base de nickel ayant un coefficient de dilatation thermique à 600°C de 14,6.

6. Assemblage selon l'une quelconque des revendications 1 à 5, **caractérisé en ce que** la tête (81) de la vis (80) et la tête (91) de l'écrou (90) comportent chacune des lumières (810; 910).

7. Assemblage selon l'une quelconque des revendications 1 à 6, **caractérisé en ce que** les première et deuxième pièces (10, 20; 60, 70) sont en matériau composite à matrice céramique.

8. Assemblage selon l'une quelconque des revendications 1 à 7, **caractérisé en ce que** les première et deuxième pièces (10, 20; 60, 70) présentent chacune une épaisseur inférieure à 3 mm.

9. Assemblage selon l'une quelconque des revendications 1 à 8, **caractérisé en ce que** les première et deuxième pièces (10, 20; 60, 70) sont des pièces d'arrière-corps de moteur aéronautique.

## Patentansprüche

1. Anordnung (100), die ein erstes Stück (10) und ein zweites Stück (20) aus Verbundmaterial umfasst, die durch mindestens ein Befestigungssystem (50) aneinander gehalten werden, das eine Schraube (30), die einen Senkkopf (31) umfasst, von dem aus sich ein Gewindeteil (32) erstreckt, und eine Mutter (40) umfasst, die einen Senkkopf (41) umfasst, von dem aus sich ein Schaft (42) erstreckt, der ein Innengewinde (43) umfasst, das mit dem Gewindeteil (32) der Schraube (30) zusammenwirkt, wobei der Kopf (31) der Schraube (30) an einer Ausfräsung (12) anliegt, die in dem ersten Stück (10) vorgesehen ist, wobei der Kopf der Mutter (41) in einer Ausfräsung (22) aufliegt, die in dem zweiten Stück (20) vorgesehen ist, **dadurch gekennzeichnet, dass** das Befestigungssystem (50) geeignet ist, mindestens einen von den zwei Köpfen (31, 41) in Richtung der Ausfräsung (12; 22) zum Kippen zu bringen, in der er bei der axialen Dehnung des Befestigungssystems (50) aufgenommen ist.

2. Anordnung nach Anspruch 1, **dadurch gekennzeichnet, dass** mindestens einer von den Senkköpfen (31, 41) des Befestigungssystems mehrere radiale Schlitze (310; 410) umfasst und einen Winkel (β₃₁; β₄₁) aufweist, der größer als derjenige (α₁₂, α₂₂) der Ausfräsung (12; 22) des Stücks ist, in dem er aufgenommen ist, und dadurch, dass der mindestens eine Kopf (31; 41) in der Ausfräsung (12; 22) in Vorspannung gehalten wird.

3. Anordnung nach Anspruch 1, **dadurch gekennzeichnet, dass** das Befestigungssystem (200) einen Stift (110) umfasst, der sich im Inneren des Befestigungssystems zwischen dem Kopf (81) der Schraube (80) und dem Kopf (91) der Mutter (90) erstreckt, und dadurch, dass der Stift (110) einen Wärmeausdehnungskoeffizienten aufweist, der größer als der Wärmeausdehnungskoeffizient der Schraube (80) und der Mutter (90) ist.

4. Anordnung nach Anspruch 3, **dadurch gekennzeichnet, dass** die Schraube (30; 80) und die Mutter (40; 90) aus einer Legierung auf Nickelbasis bestehen, die einen Wärmeausdehnungskoeffizienten von 14,8 bei 600 °C aufweist, und dadurch, dass der Stift aus Edelstahl A286 (Formel 26NCT25 und CTE_{600 °C} = 18) besteht.

5. Anordnung nach Anspruch 3, **dadurch gekennzeichnet, dass** die Schraube (30; 80) und die Mutter (40; 90) aus Titan (CTE_{600 °C} = 9,9) bestehen, während der Stift aus einer Legierung auf Nickelbasis besteht, die einen Wärmeausdehnungskoeffizienten von 14,6 bei 600 °C aufweist.

6. Anordnung nach einem der Ansprüche 1 bis 5, **dadurch gekennzeichnet, dass** der Kopf (81) der Schraube (80) und der Kopf (91) der Mutter (90) jeweils Öffnungen (810; 910) umfassen.

7. Anordnung nach einem der Ansprüche 1 bis 6, **dadurch gekennzeichnet, dass** das erste und zweite Stück (10, 20; 60, 70) aus Verbundmaterial mit Keramikmatrix bestehen.

8. Anordnung nach einem der Ansprüche 1 bis 7, **dadurch gekennzeichnet, dass** das erste und zweite Stück (10, 20; 60, 70) jeweils eine Dicke aufweisen, die kleiner als 3 mm ist.

9. Anordnung nach einem der Ansprüche 1 bis 8, **dadurch gekennzeichnet, dass** das erste und zweite Stück (10, 20; 60, 70) Hinterteile eines Flugzeugmotors sind.

## Claims

1. An assembly (100) comprising first and second parts (10, 20) made of composite material held one against the other by at least one fastener system (50) comprising a bolt (30) having a flat head (31) from which there extends a threaded portion (32), and a nut (40) having a flat head (41) from which there extends a shank (42) including tapping (43) suitable for co-operating with the threaded portion (32) of the bolt (30), the head (31) of the bolt (30) bearing against a countersink (12) formed in the first part (10), the head of the nut (41) bearing against a countersink (22) formed in the second part (20), the fastener system (50) being suitable, during axial expansion of said fastener system (50), for causing at least one of the two heads (31, 41) to tilt towards the countersink (12, 22) in which it is housed.

2. An assembly according to claim 1, **characterized in that** at least one of the flat heads (31, 41) of the fastener system includes a plurality of radial slots (310; 410) and presents an angle (β₃₁; β₄₁) greater than the angle (α₁₂, α₂₂) of the countersink (12; 22) of the part in which it is housed, and wherein at least one head (31; 41) is held in prestress in said countersink (12; 22) .

3. An assembly according to claim 1, **characterized in that** the fastener system (200) includes a peg (110) extending inside said fastener system between the head (81) of the bolt (80) and the head (91) of the nut (90) and **in that** the peg (110) presents a coefficient of thermal expansion that is greater than the coefficient of thermal expansion of the bolt (80) and of the nut (90).

4. An assembly according to claim 3, **characterized in that** the bolt (30; 80) and the nut (40; 90) are made of nickel-based alloy having a thermal expansion coefficient of 14.8 at 600°C and **in that** the peg is made of A286 stainless steel (formula 26NCT25 and CTE_{600°C} = 18).

5. An assembly according to claim 3, **characterized in that** the bolt (30; 80) and the nut (40; 90) are made of titanium (CTE_{600°C} = 9.9), while the peg is made of nickel-based alloy having a thermal expansion coefficient of 14.6 at 600°C.

6. An assembly according to anyone of claims 1 to 5, **characterized in that** both the head (81) of the bolt (80) and the head (91) of the nut (90) include respective slots (810; 910).

7. An assembly according to anyone of claims 1 to 6, **characterized in that** the first and second parts (10, 20; 60, 70) are made of ceramic matrix composite material.

8. An assembly according to anyone of claims 1 to 7, **characterized in that** each of the first and second parts (10, 20; 60, 70) presents thickness of less than 3 mm.

9. An assembly according to anyone of claims 1 to 8, **characterized in that** the first and second parts (10, 20; 60, 70) are parts of an afterbody of an aeroengine.
